# EUROPEAN PATENT APPLICATION

(11) **EP 3 223 402 A1**
(43) Date of publication of application: **27.09.2017**
(21) Application number: 15860571.7
(22) Date of filing: 16.11.2015
(51) Int. Cl.: H02K 7/116, G01D 11/16, G01D 13/22

(54) **GEARED MOTOR AND POINTER DISPLAY DEVICE**

(30) Priority: 21.11.2014 JP 2014237107
(71) Applicant: Nidec Sankyo Corporation, Suwa-gun, Nagano 393-8511 (JP)
(72) Inventor: YOKOYAMA, Masaki, Suwa-gun Nagano 393-8511 (JP)
(74) Representative: Becker Kurig Straus
(86) International application number: PCT/JP2015/082063
(87) International publication number: WO 2016/080326

(57) **Abstract**

[Problem] To provide: a geared motor with which it is possible to suppress the rebound of gears, even if a stopper mechanism provided to a gear train is activated; and a pointer display device. [Solution] The geared motor 100 and pointer display device are provided with a stopper mechanism 9 which restricts the range of movement of the trailing-side gear 42 when the trailing-side gear 42 rotates in a counter-clockwise CCW direction. Of the stopper touching part 91 and the part 92 touched by the stopper that together constitute the stopper mechanism 9, the stopper touching part 91 comprises the end 481 of a gear-side protrusion 48 which is integrally formed with the middle part 44 at the outer peripheral surface of the middle part 44 of the trailing-side gear 42. As a consequence, the stopper touching part 91 comes into contact with the part 92 touched by the stopper at a position close to the central axis of rotation of the trailing side gear 42. Therefore, when the stopper mechanism 9 is activated, the collision energy to which the trailing side cog 42 is subjected is minimal, which makes it possible to suppress the rebound of the trailing side gear 42.

## Description

### [Field of the Invention]

The present invention relates to a geared motor provided with a stopper mechanism in its gear train and a pointer type display device.

### [Background Art]

In a pointer type display device and the like, a geared motor including a motor and a gear train disposed inside a case is used and a pointer is fixed to an output member of the geared motor (Patent Literature 1). In the geared motor, Patent Literature 1 proposes to provide a stopper mechanism which is structured to stop a gear at a home position where a pointer indicates the zero point. More specifically, a structure has been proposed that, in a first gear integrally turned with an output member and a second gear meshed with the first gear for driving the first gear, a gear side protruded part is provided at a substantially middle position in a radial direction of the first gear and a support member side protruded part is provided in a support member on an imaginary line passing through a turning center of the first gear and a rotation center of the second gear and, when the first gear is turned to the position where the pointer indicates the zero point, the gear side protruded part and the support member side protruded part are abutted with each other.

### [Citation List]

### [Patent Literature]

[PTL 1] Japanese Patent Laid-Open No. 2001-327149

### [Summary of the Invention]

### [Technical Problem]

However, when the pointer is returned to the home position and the gear side protruded part provided in the first gear is abutted with the support member side protruded part, the first gear is rebounded in a reverse direction to cause the pointer to be shaken. In other words, in a case that the pointer is to be returned to the home position, a gear connected with the second gear, a rotor of a motor part and the like are also turned and thus, when the stopper mechanism is operated and the first gear is stopped, the second gear is also going to be stopped. However, the second gear receives an inertia torque from the rotor and the like in an opposite direction and the inertia torque is transmitted to the first gear and, as a result, the first gear is rebounded.

In view of the problem described above, an objective of the present invention is to provide a geared motor and a pointer type display device in which rebounding of a gear is restrained even when a stopper mechanism provided in a gear train is operated.

### [Solution to Problem]

To achieve the above mentioned objective, the present invention provides a geared motor including a motor part, an output member, a gear train having a plurality of gears structured to transmit rotation of the motor part to the output member, a support member which supports the motor part, the output member and the gear train, and a stopper mechanism which includes a stopper abutting part provided in a first gear of the plurality of the gears and a stopper abutted part provided in the support member and is structured so that, when the first gear is turned to one side in a circumferential direction, the stopper abutting part is abutted with the stopper abutted part to restrict a movable range of turning of the first gear to the one side. The first gear is provided with a plate-shaped part in which teeth are formed on its outer peripheral face and a body part which is protruded from the plate-shaped part in a turning center axial line direction of the first gear at a center of the first gear, and the stopper abutting part is a one side end part located on the one side of a gear side protruded part which is integrally formed with the body part on an outer peripheral face of the body part.

In the present invention, when the stopper abutting part of the first gear is turned to one side in a circumferential direction and is abutted with a stopper abutted part of the support member, the stopper abutting part (one side end part of the gear side protruded part) is abutted with the stopper abutted part at a position which is near to a turning center axial line of the first gear. Therefore, when the stopper mechanism is operated, collision energy applied to the first gear is small and thus rebounding of the first gear can be restrained.

In the present invention, it is preferable that the gear side protruded part is integrally formed with the plate-shaped part. According to this structure, the strength of the gear side protruded part can be increased.

In the present invention, it is preferable that the plate-shaped part is formed with plate-shaped springs which are elastically abutted with the support member in the turning center axial line direction of the first gear at a plurality of positions in the circumferential direction, and the gear side protruded part is formed at an angular position corresponding to a portion between the plate-shaped springs adjacent to each other in the circumferential direction. According to this structure, even when the plate-shaped spring is formed in the plate-shaped part of the first gear, restriction of the position for forming the gear side protruded part is small. Therefore, the gear side protruded part is easily provided on an inner side in the radial direction.

In the present invention, it is preferable that the support member includes a cylindrical tube part with which the plate-shaped spring is abutted, and the stopper abutted part is integrally formed with the cylindrical tube part on an inner side in a radial direction of the cylindrical tube part. According to this structure, the strength of the stopper abutted part can be increased.

In the present invention, it is preferable that the stopper abutted part is an other side end part located on the other side in the circumferential direction of a support body side protruded part which is protruded from an outer side in the radial direction toward an inner side in the radial direction and toward a turning center of the first gear, and a width dimension in the circumferential direction on an inner side in the radial direction of the support body side protruded part is set to be narrower than that on its outer side in the radial direction. According to this structure, even in a case that the width in the circumferential direction of the support body side protruded part is set to be wide to some extent for securing strength, when the stopper mechanism is operated, the stopper abutting part and the stopper abutted part are abutted with each other at a position which is near to the turning center of the first gear. Therefore, when the stopper mechanism is operated, collision energy applied to the first gear is small and thus rebounding of the first gear can be restrained. Further, a movable range to the one side of the first gear can be made large.

In the present invention, it is preferable that the plurality of the gears includes a second gear which is meshed with the first gear to drive the first gear, and the stopper abutted part is provided at a position where the first gear is applied with a reaction force in a direction separated from the second gear when the first gear is turned to the one side and the stopper abutting part is abutted with the stopper abutted part. According to this structure, when the stopper abutting part of the first gear is turned to one side in the circumferential direction and is abutted with the stopper abutted part of the support member, the first gear receives a reaction force in a direction separated from the second gear. Therefore, engagement of the first gear with the second gear becomes shallow and thus an inertia torque in an opposite direction from the second gear is hard to be transmitted to the first gear. Accordingly, rebounding of the first gear can be restrained.

In the present invention, it is preferable that a turning angular range of the first gear is divided into a first angular range and a second angular range by an imaginary line passing through a turning center of the first gear and a rotation center of the second gear and, in the first angular range where the stopper abutting part is moved in a direction coming close to the rotation center of the second gear when the first gear is turned to the one side, the stopper mechanism is structured so that the stopper abutting part is abutted with the stopper abutted part in an angular range of 90±60° with respect to the imaginary line when viewed from the rotation center of the first gear. According to this structure, when the stopper abutting part is turned to the one side in the circumferential direction and is abutted with the stopper abutted part of the support member, the first gear is easy to receive a reaction force in a direction separated from the second gear. Therefore, engagement of the first gear with the second gear becomes shallow and thus an inertia torque in an opposite direction from the second gear is hard to be transmitted to the first gear. Accordingly, rebounding of the first gear can be restrained.

In the present invention, it is preferable that the stopper mechanism is structured so that the stopper abutting part is abutted with the stopper abutted part in an angular range of 90±10° with respect to the imaginary line when viewed from the rotation center of the first gear. According to this structure, when the stopper abutting part is turned to the one side in the circumferential direction and is abutted with the stopper abutted part of the support member, the first gear is further easily received with a reaction force in a direction separated from the second gear. Therefore, engagement of the first gear with the second gear becomes further shallow and thus an inertia torque in an opposite direction from the second gear is hard to be transmitted to the first gear. Accordingly, rebounding of the first gear can be restrained.

In the present invention, it is preferable that the first gear and the output member are integrally turned with each other. According to this structure, a movable range of the output member can be directly restricted by the stopper mechanism.

The geared motor in accordance with the present invention may be used, for example, in a pointer type display device and, in this case, the pointer type display device has a pointer which is held by the output member. In this case, it may be structured that a stopping position by the stopper mechanism corresponds to a home position of the pointer.

### [Effects of the Invention]

In the present invention, when the stopper abutting part of the first gear is turned to the one side in a circumferential direction and is abutted with a stopper abutted part of the support member, the stopper abutting part (one side end part of the gear side protruded part) is abutted with the stopper abutted part at a position which is near to a turning center axial line of the first gear. Therefore, when the stopper mechanism is operated, collision energy applied to the first gear is small and thus rebounding of the first gear can be restrained.

### [Brief Description of Drawings]

[Fig. 1]

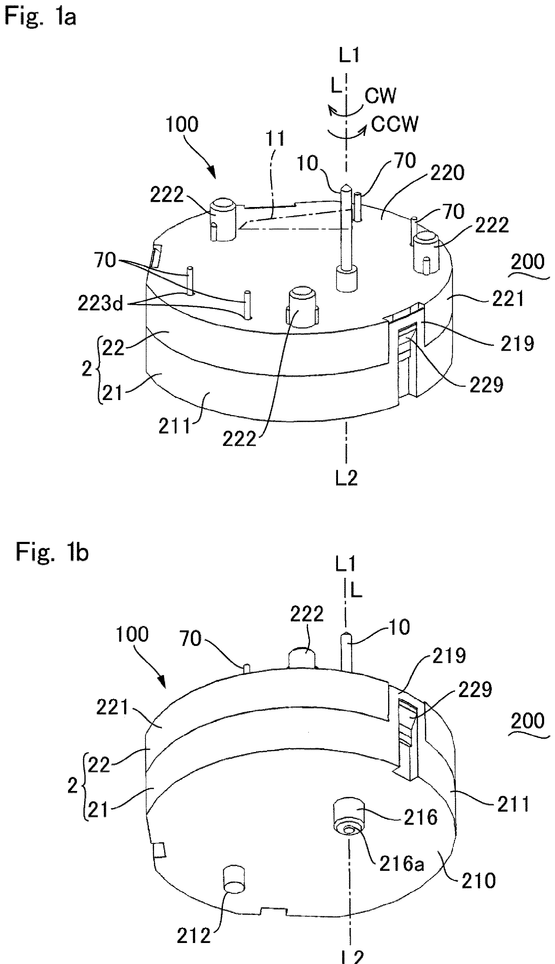

   Figs. 1a and 1b are explanatory views showing a geared motor to which the present invention is applied.
[Fig. 2]

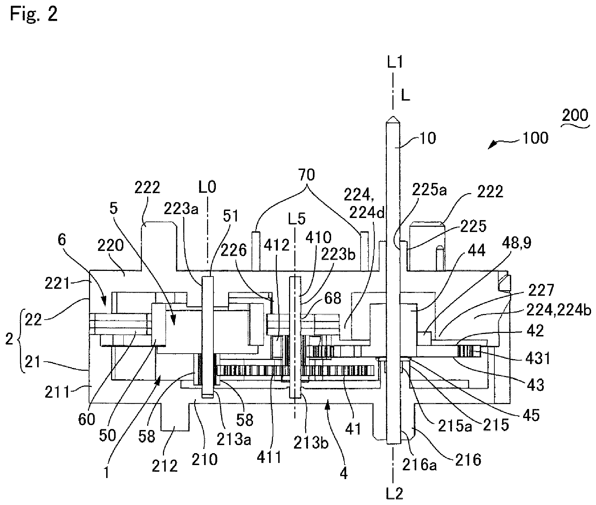

   Fig. 2 is a cross-sectional view showing a geared motor to which the present invention is applied and which is cut at a position passing a gear train.
[Fig. 3]

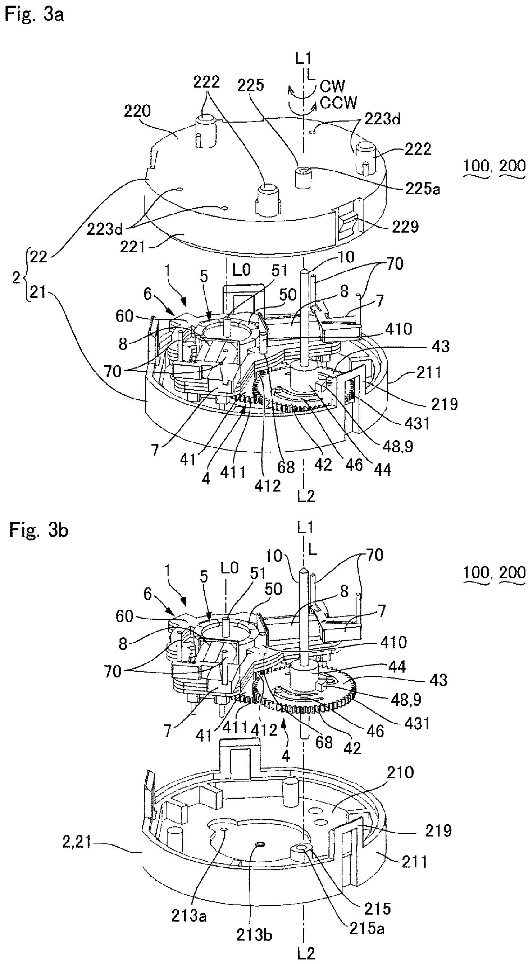

   Figs. 3a and 3b are exploded perspective views showing a geared motor to which the present invention is applied and which is viewed from an output side.
[Fig. 4]

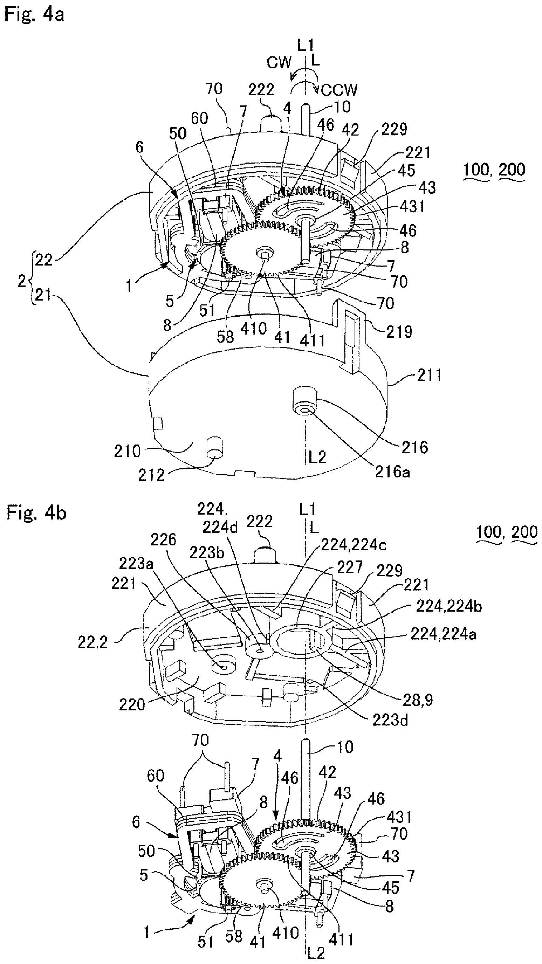

   Figs. 4a and 4b are exploded perspective views showing a geared motor to which the present invention is applied and which is viewed from an opposite-to-output side.
[Fig. 5]

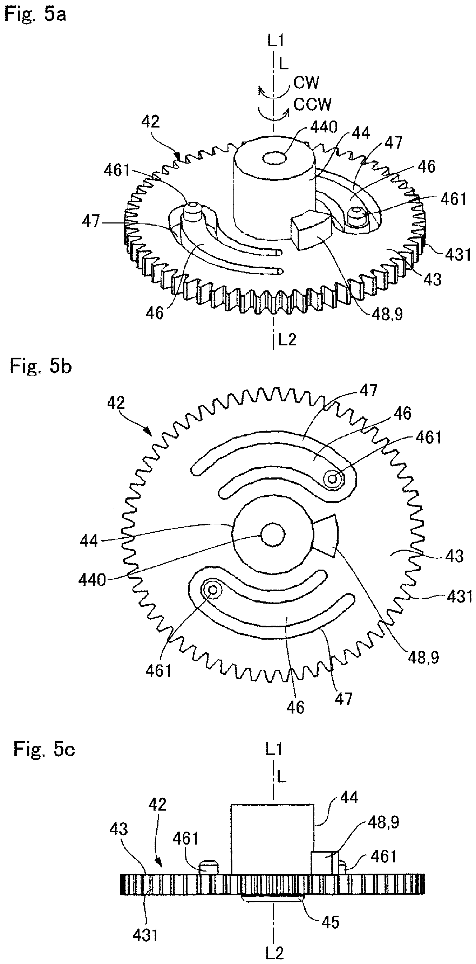

   Figs. 5a, 5b and 5c are explanatory views showing a driven gear which is used in a geared motor to which the present invention is applied.
[Fig. 6]

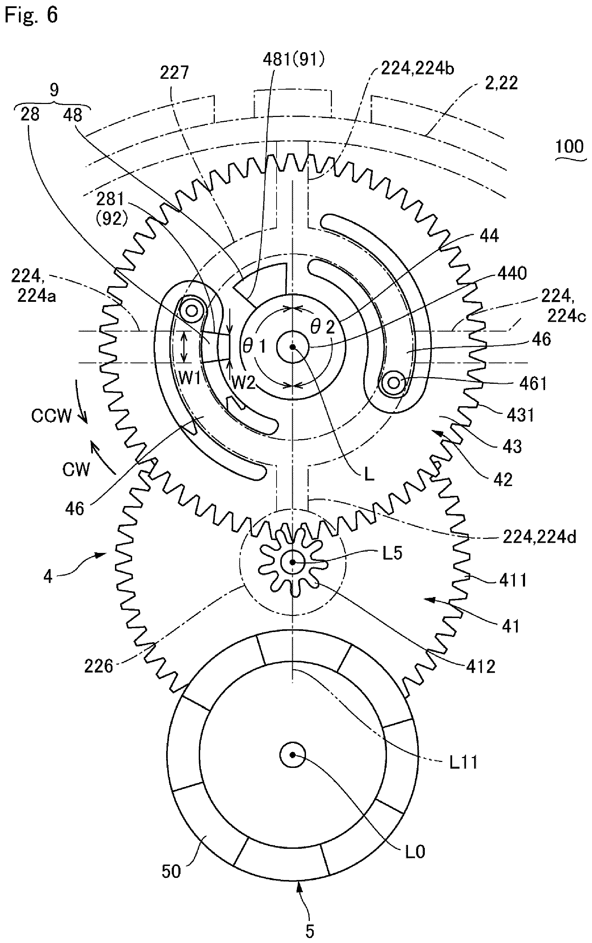

   Fig. 6 is an explanatory view showing a planar structure of a stopper mechanism which is structured in a geared motor to which the present invention is applied.

### [Description of Embodiments]

A geared motor and a pointer type display device to which the present invention is applied will be described below with reference to the accompanying drawings. In the following descriptions, in a direction where a turning center axial line "L" of an output member 10 is extended, one side to which the output member 10 is protruded is referred to as an output side "L1" and an opposite side (the other side) to the side where the output member 10 is protruded is referred to as an opposite-to-output side "L2". Further, an axial line of a rotor 5 in a motor part 1 is a rotation center axial line "L0" and an axial line of a drive side gear 41 of a gear train 4 is a rotation center axial line "L5". Further, for convenience, the one side of each of the rotation center axial lines "L0" and "L5" is also referred to as the output side "L1", and the other side of each of the rotation center axial lines "L0" and "L5" is also referred to as the opposite-to-output side "L2".

### (Entire Structure of Pointer Type Display Device)

Figs. 1a and 1b are explanatory views showing a geared motor 100 to which the present invention is applied. Fig. 1a is a perspective view showing a geared motor 100 which is viewed from an output side "L1" and Fig. 1b is a perspective view showing the geared motor 100 which is viewed from an opposite-to-output side "L2". Fig. 2 is a cross-sectional view showing the geared motor 100 to which the present invention is applied and which is cut at a position passing a gear train 4. Figs. 3a and 3b are exploded perspective views showing the geared motor 100 to which the present invention is applied and which is viewed from an output side "L1". Fig. 3a is an exploded perspective view showing a state that a second case member 22 is separated from a first case member 21, and Fig. 3b is an exploded perspective view showing a state that a gear train 4 and the like are detached from the first case member 21. Figs. 4a and 4b are exploded perspective views showing the geared motor 100 to which the present invention is applied and which is viewed from an opposite-to-output side "L2". Fig. 4a is an exploded perspective view showing a state that the first case member 21 is separated from the second case member 22, and Fig. 4b is an exploded perspective view showing a state that the gear train 4 and the like are detached from the second case member 22.

The geared motor 100 shown in Figs. 1a through 4b is structured so that a shaft-shaped output member 10 is protruded from a case 2 to the output side "L1" in the turning center axial line "L" direction. The geared motor 100 in this embodiment is used in a pointer type display device 200 and, as shown in Fig. 1a, a pointer 11 is connected with the output member 10.

The case 2 includes a first case member 21 formed in a substantially circular shape when viewed in the turning center axial line "L" direction and a second case member 22 formed in a substantially circular shape when viewed in the turning center axial line "L" direction. The second case member 22 is overlapped with the first case member 21 from the output side "L1". The case 2 is a support member which supports a motor part 1, the gear train 4 and the output member 10 described below.

The first case member 21 is provided with an end plate part 210 and a side plate part 211 in a tube shape which is protruded to the output side "L1" from an outer side edge of the end plate part 210. An outer peripheral face of the side plate part 211 is formed with a hook 219 at a plurality of positions in a circumferential direction. The second case member 22 is provided with an end plate part 220 and a side plate part 221 in a tube shape which is protruded to the opposite-to-output side "L2" from an outer side edge of the end plate part 220. An engaging protruded part 229 is formed in the side plate part 221 at a plurality of positions in the circumferential direction. Therefore, when the hooks 219 and the engaging protruded parts 229 are engaged with each other and the first case member 21 and the second case member 22 are combined with each other, the case 2 is structured. In the first case member 21, a protruded part 212 which is, for example, used for fixing the geared motor 100 is protruded toward the opposite-to-output side "L2" from the end plate part 210. Further, in the second case member 22, protruded parts 222 which are, for example, used for fixing the geared motor 100 are protruded toward the output side "L1" from the end plate part 220.

### (Structure of Motor Part 1)

The geared motor 100 includes a motor part 1 in an inside of the case 2 and the motor part 1 is a drive source for the output member 10. The motor part 1 is a stepping motor which includes a rotor 5 and a stator 6 disposed around the rotor 5. The rotor 5 is rotatably supported by a support shaft 51. An end part on the opposite-to-output side "L2" of the support shaft 51 is held by a shaft hole 213a formed in the end plate part 210 of the first case member 21, and an end part on the output side "L1" of the support shaft 51 is held by a shaft hole 223a formed in the end plate part 220 of the second case member 22.

The rotor 5 includes a pinion 58 provided at an end part on the opposite-to-output side "L2" in a rotation center axial line "L0" direction and a magnet 50 formed in a cylindrical tube shape. An "S"-pole and an "N"-pole are alternately formed at equal angular intervals on an outer peripheral face of the magnet 50. In this embodiment, the magnet 50 and the pinion 58 made of resin are integrated each other by insert molding. The stator 6 includes a stator core 60 provided with a plurality of salient poles which face the outer peripheral face of the magnet 50 with a gap space therebetween. A coil 8 is wound around each of two salient poles (main pole) of a plurality of the salient poles through a coil bobbin 7. The stator core 60 is formed in a plate shape and is structured by laminating a plurality of magnetic plates which are punched in a predetermined shape. The stator core 60 is formed with a hole 68 through which a support shaft 410 of a drive side gear 41 described below is penetrated. The coil bobbin 7 holds a plurality of terminal pins 70 to which end parts of the coil 8 are bound and connected. An end part of the terminal pin 70 is protruded to the output side "L1" through a hole 223d which is formed in the end plate part 220 of the second case member 22.

The geared motor 100 includes a gear train 4 structured to decelerate rotation of the rotor 5 and transmit it to the output member 10. In this embodiment, the gear train 4 includes the pinion 58, a drive side gear 41 (second gear in the present invention) meshing with the pinion 58, and a driven gear 42 (first gear in the present invention) meshing with the drive side gear 41. The drive side gear 41 is provided with a large diameter gear 411 meshing with the pinion 58 of the rotor 5 and a small diameter gear 412 coaxially formed with the large diameter gear 411. The drive side gear 41 is rotatably supported by the support shaft 410. An end part on the opposite-to-output side "L2" of the support shaft 410 is held by a shaft hole 213b formed in the end plate part 210 of the first case member 21. An end part on the output side "L1" of the support shaft 410 is held by a shaft hole 223b formed in a column part 226 which is formed in the end plate part 220 of the second case member 22. The driven gear 42 is provided with a plate-shaped part 43 in a circular plate shape whose outer peripheral face is formed with outer teeth 431 meshing with the small diameter gear 412.

### (Structure of Driven Gear 42)

Figs. 5a, 5b and 5c are explanatory views showing the driven gear 42 which is used in the geared motor 100 to which the present invention is applied. Fig. 5a is a perspective view showing the driven gear 42 which is viewed in an oblique direction on the output side "L1", Fig. 5b is a plan view showing the driven gear 42 which is viewed in an oblique direction on the opposite-to-output side "L2", and Fig. 5c is a side view showing the driven gear 42.

The driven gear 42 is a final gear structured to transmit its rotation to the output member 10 and to be integrally turned with the output member 10. The driven gear 42 is structured as described below.

In Figs. 5a, 5b and 5c, the driven gear 42 is provided with a shaft-shaped body part 44, which is protruded from the center of the plate-shaped part 43 to the output side "L1", and a circular protruded part 45 which is protruded from the center of the plate-shaped part 43 to the opposite-to-output side "L2". A shaft hole 440, i.e., a through hole into which the output member 10 is fitted is provided in the body part 44 and the circular protruded part 45. The driven gear 42 and the output member 10 are integrally turned with each other.

The plate-shaped part 43 is formed with a groove 47 which penetrates the plate-shaped part 43 in the turning center axial line "L" direction. The groove 47 is extended to one side around the turning center axial line "L" and then bent in a "U"-shape and extended to the other side in the circumferential direction. As a result, a portion of the plate-shaped part 43 which is surrounded by the groove 47 is formed to be a plate-shaped spring 46 whose one end in the circumferential direction is connected with the plate-shaped part 43. A protruded part 461 protruded toward the output side "L1" is formed on a tip end side of the plate-shaped spring 46. In this embodiment, the plate-shaped spring 46 is formed at two positions with equal angular intervals in the circumferential direction so as to extend in the same direction and an angular interval of two plate-shaped springs 46 is 180°.

The plate-shaped part 43 is formed with a gear side protruded part 48 protruded to the output side "L1" and to an outer side in a radial direction at an angular position between two plate-shaped springs 46 in the circumferential direction. The gear side protruded part 48 structures a stopper mechanism 9 which restricts a movable range when the driven gear 42 is turned in a counterclockwise direction "CCW" (one side in the circumferential direction) by abutting with a support body side protruded part 28 described below.

### (Support Structure for Driven Gear 42 and Output Member 10)

As shown in Figs. 3a through 4b, the end plate part 210 of the first case member 21 is formed with a cylindrical tube part 215 protruded to the output side "L1" and a cylindrical tube part 216 protruded to the opposite-to-output side "L2". The cylindrical tube parts 215 and 216 are formed with shaft holes 215a and 216a which turnably support an opposite-to-output side end part of the output member 10.

On the other hand, the end plate part 220 of the second case member 22 is formed with a cylindrical tube part 225 which is protruded to the output side "L1". The cylindrical tube part 225 is formed with a shaft hole 225a which turnably supports an output side portion of the output member 10.

A face on the opposite-to-output side "L2" of the end plate part 220 of the second case member 22 is formed with a cylindrical tube part 227 into which the body part 44 of the driven gear 42 is entered and formed with plate-shaped ribs 224 which are extended from the cylindrical tube part 227 toward outer sides in a radial direction. An inner diameter of the cylindrical tube part 227 is larger than an outer diameter of the body part 44 of the driven gear 42, and an inner face of the cylindrical tube part 227 does not contact with the body part 44 of the driven gear 42. The ribs 224 are formed at four positions with equal angular intervals around the cylindrical tube part 227. Three ribs 224a, 224b and 224c of four ribs 224 are connected with the side plate part 221 and the remaining one rib 224d is connected with the column part 226 formed with a shaft hole 223b.

In this embodiment, the circular protruded part 45 of the driven gear 42 is abutted with the cylindrical tube part 215 of the first case member 21 and movement of the driven gear 42 to the opposite-to-output side "L2" is prevented. Further, the protruded parts 461 of the plate-shaped springs 46 of the driven gear 42 are elastically abutted with an end face on the opposite-to-output side "L2" of the cylindrical tube part 227 of the second case member 22 and movement of the driven gear 42 to the output side "L1" is restricted. Therefore, the driven gear 42 and the output member 10 are restrained from rattling in the turning center axial line "L" direction.

### (Operations)

In the geared motor 100 and the pointer type display device 200 structured as described above, when electrical power is supplied to the coil 8 through the terminal pins 70 in a state that the pointer 11 is stopped at the zero point (home position), the rotor 5 is rotated and the rotation is transmitted to the output member 10 through the gear train 4. Therefore, the pointer 11 connected with the output member 10 is turned in the clockwise direction CW. In this case, an angular position of the pointer 11 is changed by inputting a predetermined number of drive pulses into the coil 8 and, after the pointer 11 is turned to a target position in the clockwise direction CW, the pointer 11 is stopped. Further, when drive pulses for reverse rotation is supplied, the pointer can be turned in the counterclockwise direction CCW to another target position.

### (Structure of Stopper Mechanism)

Fig. 6 is an explanatory view showing a planar structure of the stopper mechanism 9 which is structured in the geared motor 100 to which the present invention is applied. In Fig. 6, the gear train 4 is shown by the solid line and the second case member 22 is shown by the alternate long and short dash line.

In Fig. 6, in the geared motor 100 in this embodiment, the stopper mechanism 9 is structured between the driven gear 42 and the second case member 22 (support member) so that, when the pointer 11 shown in Fig. 1a is turned in the counterclockwise direction CCW and reached to the home position indicating the zero point, a stopper abutting part 91 provided in the driven gear 42 is abutted with a stopper abutted part 92 provided in the second case member 22 to restrict a movable range in the counterclockwise direction CCW (to one side around the turning center axial line "L") of the driven gear 42.

In this embodiment, the driven gear 42 is provided with a gear side protruded part 48 protruding toward an outer side in the radial direction on an outer peripheral face of the body part 44 which is protruded to the output side "L1" from the plate-shaped part 43 at the center of the driven gear 42. The stopper abutting part 91 is structured by an end part 481 (one side end part) which is located on the counterclockwise direction CCW side of the gear side protruded part 48. In this embodiment, the gear side protruded part 48 is integrally formed with the body part 44 and is also integrally formed with the plate-shaped part 43.

In this embodiment, the plate-shaped part 43 is formed with the plate-shaped spring 46 and the groove 47 at two positions in the circumferential direction, and the gear side protruded part 48 is formed at an angular position corresponding to a portion between the plate-shaped springs 46 adjacent to each other in the circumferential direction. Therefore, although an end part on an outer side in the radial direction of the gear side protruded part 48 is located on an outer side in the radial direction with respect to a portion on an inner side in the radial direction of the groove 47, since the gear side protruded part 48 and the groove 47 are displaced from each other in the circumferential direction, the gear side protruded part 48 and the body part 44 can be integrally formed with each other. In this embodiment, the gear side protruded part 48 is formed in a planar shape in which a width dimension in the circumferential direction on its inner side in the radial direction is shorter than a width dimension in the circumferential direction on its outer side in the radial direction. Therefore, a rotatable angular range of the driven gear 42 is wide. However, it may be structured that a width dimension in the circumferential direction on an inner side in the radial direction of the gear side protruded part 48 and a width dimension in the circumferential direction on its outer side in the radial direction are equal to each other, or that a width dimension in the circumferential direction on its inner side in the radial direction is longer than a width dimension in the circumferential direction on its outer side in the radial direction.

The second case member 22 is provided with a support body side protruded part 28 which is protruded from the end plate part 220 to the opposite-to-output side "L2". The stopper abutted part 92 is structured by an end part 281 (the other side end part) on a side in the clockwise direction CW of the support body side protruded part 28 (the other side around the turning center axial line "L"). In this embodiment, the support body side protruded part 28 is protruded from an inner peripheral face of the cylindrical tube part 227 toward the turning center axial line "L" of the driven gear 42 on an inner side of the cylindrical tube part 227, and an end part on an outer side in the radial direction of the support body side protruded part 28 and the inner peripheral face of the cylindrical tube part 227 are connected with each other.

In this embodiment, the support body side protruded part 28 is provided with a planar shape having a substantially trapezoid and a width dimension in the circumferential direction on its inner side in the radial direction is narrower than that on its outer side in the radial direction. In other words, the support body side protruded part 28 is protruded from the inner peripheral face of the cylindrical tube part 227 to the inner side in the radial direction along an extended line of the rib 224a on the inner side of the cylindrical tube part 227. In this case, a width dimension "W1" on the outer side in the radial direction of the support body side protruded part 28 is substantially equal to a width dimension of the rib 224a, but a width dimension "W2" on its inner side in the radial direction is set to be narrower than a width dimension of the rib 224a. In other words, the width dimension "W1" on the outer side in the radial direction of the support body side protruded part 28 and the width dimension "W2" on its inner side in the radial direction are set in the following relationship:
the width dimension "W1" > the width dimension "W2".

Further, the stopper abutted part 92 (end part 281 of the support body side protruded part 28) is provided at a position where the driven gear 42 receives a reaction force in a direction separated from the drive side gear 41 when the driven gear 42 is turned in the counterclockwise direction CCW and the stopper abutting part 91 (end part 481 of the gear side protruded part 48) is abutted with the stopper abutted part 92. More specifically, when a turning angle range of the driven gear 42 is divided into a first angular range θ1 and a second angular range θ2 by an imaginary line "L11" passing through the turning center of the driven gear 42 (turning center axial line "L") and the rotation center of the drive side gear 41 (rotation center axial line "L5"), the stopper abutted part 92 (end part 281 of the support body side protruded part 28) is disposed in the first angular range θ1 in which the stopper abutting part 91 is moved in a direction so as to come close to the rotation center of the drive side gear 41 when the driven gear 42 is turned in the counterclockwise direction CCW.

Further, the stopper abutted part 92 is provided in an angular range of 90±60° with respect to the imaginary line "L11" when viewed from the turning center of the driven gear 42. Especially, in this embodiment, the stopper abutted part 92 is provided in an angular range of 90±10° with respect to the imaginary line "L11" when viewed from the turning center of the driven gear 42. Therefore, when the driven gear 42 is turned in the counterclockwise direction CCW and the stopper abutting part (end part 481 of the gear side protruded part 48) is abutted with the stopper abutted part 92, the driven gear 42 is surely received with a reaction force in a direction separated from the drive side gear 41.

### (Principal Effects in this Embodiment)

As described above, in the geared motor 100 and the pointer type display device 200 in this embodiment, the stopper mechanism 9 which determines a movable range of the driven gear 42 when the driven gear 42 (output member 10) is turned in the counterclockwise direction CCW is provided. Therefore, the position of the pointer 11 indicating the zero point can be determined so that the position where the stopper mechanism 9 is operated is determined as a home position of the driven gear 42.

In this embodiment, in the stopper abutting part 91 and the stopper abutted part 92 which structure the stopper mechanism 9, the stopper abutting part 91 is the end part 481 of the gear side protruded part 48 which is integrally formed with the body part 44 on an outer peripheral face of the body part 44 of the driven gear 42. Therefore, the stopper abutting part 91 is abutted with the stopper abutted part 92 at a position near to the turning center axial line "L" of the driven gear 42. Accordingly, when the stopper mechanism 9 is operated, collision energy received by the driven gear 42 is small and thus rebounding of the driven gear 42 can be restrained. As a result, when the driven gear 42 is turned in the counterclockwise direction CCW toward the zero point of the pointer 11 and the zero point is indicated, the pointer 11 is hard to be shaken. Further, the gear side protruded part 48 is integrally formed with the plate-shaped part 43 of the driven gear 42 and thus the strength of the gear side protruded part 48 can be increased.

The plate-shaped part 43 is formed with the plate-shaped springs 46 at a plurality of positions in the circumferential direction and the gear side protruded part 48 is formed at an angular position corresponding to a portion between the plate-shaped springs 46 adjacent to each other in the circumferential direction. Therefore, even when the plate-shaped springs 46 are formed in the plate-shaped part 43, restriction of the position for forming the gear side protruded part 48 is reduced. Accordingly, the gear side protruded part 48 is easily provided on an inner side in the radial direction.

On the other hand, the stopper abutted part 92 is the end part 281 of the support body side protruded part 28 which is protruded toward the turning center of the driven gear 42 from an outer side in the radial direction to an inner side in the radial direction, and a width dimension in the circumferential direction of the support body side protruded part 28 on the inner side in the radial direction is narrower than that on its outer side in the radial direction. Therefore, even in a case that the width in the circumferential direction of the support body side protruded part 28 is set to be wide to some extent for securing strength, when the stopper mechanism 9 is operated, the stopper abutting part 91 and the stopper abutted part 92 are abutted with each other at a position near the turning center of the driven gear 42. Accordingly, when the stopper mechanism 9 is operated, collision energy applied to the driven gear 42 is small and thus rebounding of the driven gear 42 can be restrained. As a result, when the pointer 11 is turned in the counterclockwise direction CCW toward the zero point of the pointer 11 and the zero point is indicated, the pointer 11 is hard to be shaken.

The width dimension in the circumferential direction of the support body side protruded part 28 is narrower on an inner side in the radial direction than that on its outer side in the radial direction and thus a movable range in the counterclockwise direction CCW of the driven gear 42 can be increased. Further, the support body side protruded part 28 is integrally formed with the cylindrical tube part 227 on an inner side in the radial direction of the cylindrical tube part 227. Therefore, the strength of the support body side protruded part 28 (stopper abutted part 92) can be increased.

In the stopper mechanism 9, when the driven gear 42 is turned in the counterclockwise direction CCW and the stopper abutting part (the end part 481 of the gear side protruded part 48) is abutted with the stopper abutted part 92 (the end part 281 of the support body side protruded part 28), the stopper abutted part 92 is provided at a position where the driven gear 42 is applied with a reaction force in a direction separated from the drive side gear 41. More specifically, when the stopper mechanism 9 is operated, the stopper abutting part 91 is abutted with the stopper abutted part 92 in the first angular range θ1. Therefore, when the stopper mechanism 9 is operated, engagement of the drive side gear 41 with the driven gear 42 becomes shallow and thus an inertia torque in an opposite direction is hard to be transmitted from the drive side gear 41 and the rotor 5 to the driven gear 42. Accordingly, rebounding of the driven gear 42 can be restrained and thus, when the pointer 11 is turned in the counterclockwise direction CCW toward the zero point of the pointer 11 and the zero point is indicated, the pointer 11 is hard to be shaken.

Especially, in this embodiment, in the first angular range θ1, the stopper abutting part 91 is abutted with the stopper abutted part 92 in an angular range of 90±60° with respect to the imaginary line "L11" when viewed from the turning center of the drive side gear 41. In addition, in this embodiment, in the first angular range θ1, the stopper abutting part 91 is abutted with the stopper abutted part 92 in an angular range of 90±10° with respect to the imaginary line "L11" when viewed from the turning center of the drive side gear 41. Therefore, when the stopper mechanism 9 is operated, the driven gear 42 is surely applied with a reaction force in a direction separated from the drive side gear 41. Therefore, engagement of the drive side gear 41 with the driven gear 42 becomes shallow and thus an inertia torque in an opposite direction is hard to be transmitted from the drive side gear 41 to the driven gear 42. Accordingly, rebounding of the driven gear 42 can be restrained and thus, when the pointer 11 is turned in the counterclockwise direction CCW toward the zero point of the pointer 11 and the zero point is indicated, the pointer 11 is hard to be shaken.

In addition, the stopper mechanism 9 is structured between the driven gear 42 integrally turned with the output member 10 and the second case member 22. Therefore, a movable range in the counterclockwise direction CCW of the output member 10 (pointer 11) can be directly restricted by the stopper mechanism 9.

### [Other Embodiments]

In the embodiment described above, the stopper mechanism 9 is provided between the second case member 22 of the case 2 (support member) and the driven gear 42 (second gear). However, the stopper mechanism 9 may be provided between the first case member 21 and the driven gear 42 (second gear).

In the embodiment described above, the stopper mechanism 9 is structured between the driven gear 42 and the second case member 22. However, the present invention may be applied to a case that the stopper mechanism 9 is structured between the drive side gear 41 and the second case member 22. In this case, the drive side gear 41 corresponds to the first gear in the present invention and the pinion 56 corresponds to the second gear in the present invention.

In the embodiment described above, the gear train 4 includes two gears (drive side gear 41 and driven gear 42) in addition to the pinion 58. However, the present invention may be applied to a case that the gear train 4 includes two gears including the pinion 58, or to a case that the gear train 4 includes four or more gears including the pinion 58.

In the embodiment described above, as an example, the geared motor 100 is applied to a pointer type display device 200. However, the present invention may be applied to a geared motor other than the geared motor 100 for a pointer type display device.

In the embodiment described above, the output member 10 and the driven gear 42 are separately provided from each other. However, the output member 10 and the driven gear 42 may be integrally formed with each other. In this case, it may be structured that a body part 44 having a larger diameter than the output member 10 is formed in a root portion of the shaft-shaped output member 10. Alternatively, it may be structured that a shaft-shaped output member 10 is protruded from the plate-shaped part 43 and no body part 44 having a larger diameter than the output member 10 is formed in a root portion of the output member 10. In a case that the former structure is adopted, the gear side protruded part 48 is integrally formed with the body part 44. In a case that the latter structure is adopted, a root portion of the output member 10 corresponds to the body part 44 and the gear side protruded part 48 is integrally formed in a root portion of the output member 10.

In the embodiment described above, the support body side protruded part 28 is integrally formed in the cylindrical tube part 227 of the second case member 22. However, in a case that the cylindrical tube part 227 is not formed, it may be structured that the support body side protruded part 28 is integrally formed with the end plate part 220.

### [Reference Signs List]

1 .. motor part, 2 .. case (support member), 4 .. gear train, 5 .. rotor, 6 .. stator, 9 .. stopper mechanism, 10 .. output member, 11 .. pointer, 21 .. first case member, 22 .. second case member (support member), 28 .. support body side protruded part, 41 .. drive side gear (second gear), 42 .. driven gear (first gear), 43 .. plate-shaped part, 44 .. body part, 46 .. plate-shaped spring, 48 .. gear side protruded part, 58 .. pinion, 91 .. stopper abutting part, 92 .. stopper abutted part, 100 .. geared motor, 200 .. pointer type display device, 227 .. cylindrical tube part, 281 .. end part of support body side protruded part, 481 .. end part of gear side protruded part, CCW .. counterclockwise direction (one side in circumferential direction), CW .. clockwise direction (one side of circumferential direction), "L" .. turning center axial line of output member, "L11" .. imaginary line, "L5" .. rotation center axial line of drive side gear, θ1 .. first angular range, θ2 .. second angular range

## Claims

1. A geared motor comprising:
a motor part;
an output member;
a gear train comprising a plurality of gears structured to transmit rotation of the motor part to the output member;
a support member which supports the motor part, the output member and the gear train; and
a stopper mechanism which comprises a stopper abutting part provided in a first gear of the plurality of the gears and a stopper abutted part provided in the support member and is structured so that, when the first gear is turned to one side in a circumferential direction, the stopper abutting part is abutted with the stopper abutted part to restrict a movable range of turning of the first gear to the one side;
wherein the first gear is provided with a plate-shaped part in which teeth are formed on its outer peripheral face and a body part which is protruded from the plate-shaped part in a turning center axial line direction of the first gear at a center of the first gear; and
wherein the stopper abutting part is a one side end part located on the one side of a gear side protruded part which is integrally formed with the body part on an outer peripheral face of the body part.

2. The geared motor according to claim 1, wherein the gear side protruded part is integrally formed with the plate-shaped part.

3. The geared motor according to claim 1 or 2, wherein
the plate-shaped part is formed with plate-shaped springs which are elastically abutted with the support member in the turning center axial line direction of the first gear at a plurality of positions in the circumferential direction, and
the gear side protruded part is formed at an angular position corresponding to a portion between the plate-shaped springs adjacent to each other in the circumferential direction.

4. The geared motor according to claim 3, wherein
the support member comprises a cylindrical tube part with which the plate-shaped spring is abutted, and
the stopper abutted part is integrally formed with the cylindrical tube part on an inner side in a radial direction of the cylindrical tube part.

5. The geared motor according to one of claims 1 through 4, wherein
the stopper abutted part is an other side end part located on the other side in
the circumferential direction of a support body side protruded part which is protruded from an outer side in the radial direction toward an inner side in the radial direction and toward a turning center of the first gear, and
a width dimension in the circumferential direction on an inner side in the radial direction of the support body side protruded part is set to be narrower than that on its outer side in the radial direction.

6. The geared motor according to one of claims 1 through 5, wherein
the plurality of the gears comprises a second gear which is meshed with the first gear to drive the first gear, and
the stopper abutted part is provided at a position where the first gear is applied with a reaction force in a direction separated from the second gear when the first gear is turned to the one side and the stopper abutting part is abutted with the stopper abutted part.

7. The geared motor according to claim 6, wherein
a turning angular range of the first gear is divided into a first angular range and a second angular range by an imaginary line passing through a turning center of the first gear and a rotation center of the second gear, and
in the first angular range where the stopper abutting part is moved in a direction coming close to the rotation center of the second gear when the first gear is turned to the one side, the stopper mechanism is structured so that the stopper abutting part is abutted with the stopper abutted part in an angular range of 90±60° with respect to the imaginary line when viewed from the rotation center of the first gear.

8. The geared motor according to claim 7, wherein the stopper mechanism is structured so that the stopper abutting part is abutted with the stopper abutted part in an angular range of 90±10° with respect to the imaginary line when viewed from the rotation center of the first gear.

9. The geared motor according to one of claims 1 through 8, wherein the first gear and the output member are integrally turned with each other.

10. A pointer type display device comprising the geared motor defined in one of claims 1 through 9, comprising a pointer which is held by the output member.

11. The pointer type display device according to claim 10, wherein a stopping position by the stopper mechanism corresponds to a home position of the pointer.
